# EUROPÄISCHE PATENTSCHRIFT

(11) **EP 0 569 680 B1**
(45) Veröffentlichungstag und Bekanntmachung des Hinweises auf die Patenterteilung: **24.07.1996**
(21) Anmeldenummer: 93103979.6
(22) Anmeldetag: 11.03.1993
(51) Int. Cl.: G01S 13/90, G01S 7/292

(54) **Verfahren zur Datenreduktion**
Data Reducing Method
Procédé de réduction de données

(30) Priorität: 09.05.1992 DE 4215230
(43) Veröffentlichungstag der Anmeldung: 18.11.1993
(73) Patentinhaber: DORNIER GMBH, D-88004 Friedrichshafen (DE)
(72) Erfinder: Fritsch, Bruno, Dipl.-Ing., W-7775 Bermatingen (DE)
(74) Vertreter: Landsmann, Ralf, Dipl.-Ing.

(56) Entgegenhaltungen:
- FR-A- 2 629 602
- US-A- 4 829 303
- ELECTRONIC ENGINEERING Bd. 63, Nr. 776, 1. August 1991, LONDON GB Seiten 41 - 43 KIRSTEN ET AL. 'Applications of undersampling techniques'
- ELECTRONIC ENGINEERING Bd. 63, Nr. 775, 1. Juli 1991, LONDON GB Seiten 39 - 43 KIRSTEN ET AL 'undersampling reduces data acquisition costs'
- PATENT ABSTRACTS OF JAPAN vol. 015, no. 125 (E-1050)27. Marz 1991 & JP-A-30 11 826 ( MITSHUBISHI)

## Beschreibung

### Verfahren zur Datenreduktion

Die Erfindung betrifft ein Verfahren zur Datenreduktion.

Im Bereich der Aufklärung mit Synthetik-Apertur-Radar (SAR)-Systemen wird von einem Flugkörper der überflogene Bereich mittels Mikrowellen aufgenommen. Dabei wird ein großer aufzuklärender Bereich (Streifenbreite) bei gleichzeitig hoher Auflösung gefordert. Die dabei entstehenden hohen Datenraten - ca. 300 Mbit/s bei terrestrischen Systemen, 1 Gbit/s bei Aufklärungssatelliten - sind zur Zeit nicht übertragbar. Bei laufenden Systemauslegungen wird deshalb der ausgeleuchtete Streifen reduziert oder die Auflösung verringert. Auch umschaltbare Systeme sind vorgeschlagen worden. Eine Abhilfe wäre eine einfache Datenreduktion an Bord in Echtzeit.

Aus der **US 4,829,303** ist ein Verfahren zur Datenreduktion bekannt, bei dem das empfangene Radarecho zuerst vorverarbeitet wird. Aus dem resultierenden Wechselspannungssignal wird anschliessend Betrag und Phase ermittelt. Diese werden mit identischen Abtastraten abgetastet.

Aufgabe der Erfindung ist es, ein Verfahren zur Datenreduktion zu schaffen, mit der eine effektive Reduktion ohne Verlust der Eindeutigkeit möglich ist, wobei insbesondere Geisterbilder vermieden werden.

Diese Aufgabe wird mit dem Verfahren nach dem Patentanspruch gelöst.

Bei dem erfindungsgemäßen Verfahren werden die zu übertragenden Wechselspannungssignale A nicht als In-Phase I und Quadratur-Phase Q übermittelt, sondern es wird von den Wechselspannungssignalen A der Betrag und die Phase ermittelt und dann abgetastet.

Die Erfindung ermöglicht die Abtastung von Wechselsignalen mit großem Dynamikbereich und eine Datenreduktion mit einfachen Mitteln. Die Abtastung erfolgt unter Beachtung des Abtasttheorems, wonach die Abtastfrequenz mindestens doppelt so hoch sein muß wie die Bandbreite des Signals. Bisher wurde die Datenrate durch die Abtastrate und den Dynamikbereich des Signals bestimmt, wobei der Dynamikbereich die Wortgröße vorgab. Eine Reduzierung der Abtastrate führte dazu, daß höherfrequente Signalkomponenten als tieffrequente Komponenten dargestellt werden und daher von diesen nicht mehr unterscheidbar sind (sogenannte Geisterbilder im Radarsystem). Zusätzlich trat ein Auflösungsverlust ein.
Die Wortgröße müßte entsprechend der größten Signalamplitude gewählt werden, die jedoch selten vorkommt. Dies hatte eine nicht gleichmäßige Nutzung der Zahlen im Datenstrom zur Folge, was durch die Erfindung vermieden wird.

Wechselsignale sind in Betrag und Phase darstellbar. Wird das Wechselsignal derart dargestellt und werden Betrag und Phase quantisiert, so ergeben sich Vorteile. Wegen der Gleichverteilung der Phase wird der verfügbare Zahlenbereich gleichmäßig genutzt und es kann deshalb ein kleinerer Zahlenbereich verwendet werden. Der Betrag ist immer positiv, so entfällt eine Kennung für das Vorzeichen. Ebenso fehlen Zahlen in der Nähe des Nullpunktes. Die kleinste Zahl entspricht der Amplitude des Systemrauschens.
Die Abtastrate der Phase wird durch ihre Rotationsgeschwindigkeit bestimmt und bleibt unverändert (doppelt so hoch wie die höchste Frequenz). Eine Reder Abtastrate des Betrages führt nicht zu Mehrdeutigkeiten wie das Unterabtasten der Amplitude, sondern wegen der Nichtlinearität des Systems zu einem Gemisch von Frequenzen, das Rauschcharakter hat. In vielen Fällen, besonders bei der Auswertung von Radarsignalen, ist der erste Effekt, jedoch nicht der zweite in gewissen Grenzen tolerierbar. Ein Unterabtasten des Betrages zur Reduktion der Datenrate wird dadurch möglich.

Das erfindungsgemäße Verfahren kann von einem Empfänger für Radarsignale mit einem Demodulator, der Betrag und Phase dieser Signale liefert, realisiert werden.

Die Erfindung wird anhand zweier Figuren näher erläutert.
Fig. 1 zeigt das Signal A und seine Anteile in Phasendarstellung,
Fig. 2 zeigt zwei an sich bekannte Schaltungen zur Ermittlung von Phase und Betrag.

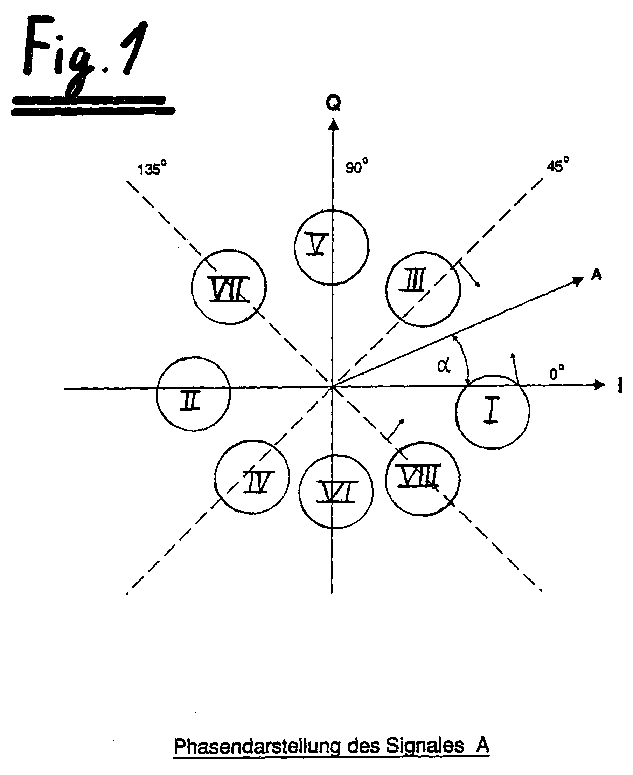

Fig. 1 zeigt das Wechselsignal **A** in Phasendarstellung. Üblich ist die Übermittlung des Signalwertes **A** in den beiden Anteilen In-Phase **I** und Quadratur **Q.** Erfindungsgemäß werden nun statt dessen der Betrag (in der Phasendarstellung die Länge des Pfeiles **A**) und seine Phase α abgetastet und übermittelt.

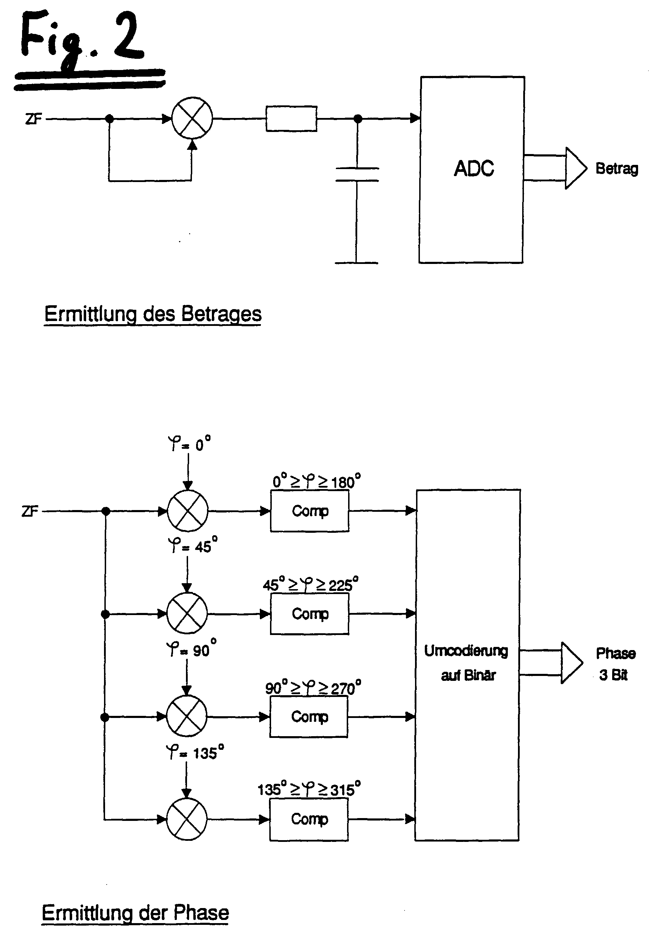

Fig. 2 zeigt oben eine Schaltung zur Ermittlung des Betrages. Das in Zwischenfrequenz kommende Signal **A** wird von einer Multiplizierschaltung quadriert und gelangt zu einem aus einem Widerstand und einem Kondensator gebildeten Tiefpaß. Dieser läßt praktisch nur die niederfrequente Einhüllende passieren, die dem Betrag entspricht. Der folgende Analog/Digital-Wandler gibt eine Digitalzahl, die dem Betrag des Signals **A** entspricht, aus.

Fig. 2 zeigt unten eine beispielhatte Schaltung zur Ermittlung der Phase des im Zwischenfrequenzbereich ankommenden Signals **A** mit vier Zweigen, die je einen Mischer (Multiplizierer) und einen Komparator enthalten. Den Multiplizierern wird jeweils das Zwischenfrequenz-Signal **A** zugeführt, sowie ein Zwischenfrequenz-Signal in definierter Phasenlage, nämlich mit den Phasen und ϕ= O°, ϕ=45°, ϕ=90° und ϕ= 135°.
Ist das Ergebnis des obersten Komparators positiv, dann ist die Phase im Bereich I der Fig. 1, das heißt die Phase liegt zwischen -90° und +90°. Sie liegt nicht im Bereich II zwischen +90° und 270°.
Ist das Ergebnis des zweiten Komparators positiv, dann ist der Phasenwert im Halbraum III (zwischen -45° und +135°) und nicht im Halbraum IV.
Ist das Ergebnis des dritten Komparators positiv, dann befindet sich die Phase im Sektor V, also zwischen O und 180°, nicht im Sektor VI.
Ist das Ergebnis des vierten Komparators positiv, dann befindet sich die Phase im Sektor VII, also zwischen 45° und 235°, nicht im Sektor VIII.

Die kombinierte Auswertung der vier Aussagen zeigt für dieses Beispiel:
**A** befindet sich in den Halbräumen I, III, V und VIII und nicht in den Halbräumen II, IV, VI, VII. Die Phase des Sektors **A** liegt damit im Bereich zwischen O und 45°, als Mittelwert können 22,5° angenommen werden mit einer Genauigkeit von ±22,5°. Als Ergebnis wird eine Digitalzahl ausgegeben, die dieser Lage entspricht. In diesem Beispiel erfolgt die Abtastung der Phase mit hoher Abtastrate aber geringer Wortlänge (z.B. 3 oder 4 bit). Ausführungen mit höherer Auflösung und höherer Wortlänge sind selbstverständlich möglich.
Erfindungsgemäß wird die Abtastrate des Betrages geringer gewählt, als das für lineare Systeme gültige Abtasttheorem vorgibt (Unterabtastung). Dabei werden werden entweder nicht alle Meßwerte benutzt oder aber es wird aus benachbarten Meßwerten ein neuer Wert, z.B. der Mittelwert, gebildet. Die geometrische Auflösung bleibt erhalten, sogenannte Geisterbilder werden vermieden.

Um eine gleichmäßige Häufigkeit aller Zahlen zu erzielen, aber auch um einen größeren Dynamikbereich, bei gegebener Anzahl der Bits, abzudecken, sind Umkodierungen sinnvoll und möglich. Die Darstellung des Betrags mittels logadthmischer Zahlen ist eine einfache und effektive Methode. Beliebige, an die Statistik der Zahlen angepaßte Kennlinien oder Umkodierungen sind ebenso möglich.

Die auf diese Weise reduzierte Datenmenge wird übertragen oder gespeichert. Für die Verarbeitung oder Darstellung der Signale werden die fehlenden Werte rekonstruiert. Im einfachsten Fall wird ein aktueller Phasenwert mit einem vergangenen Betragswert kombiniert.

## Patentansprüche

1. Verfahren zur Datenreduktion in Radarsystemen, wobei von dem zu reduzierenden Wechselspannungssignal Betrag und Phase ermittelt werden und diese anschließend abgetastet werden, **dadurch gekennzeichnet,** daß
- das zu reduzierende Wechselspannungssignal das Ausgangssignal des Radarempfängers ist, und
- der ermittelte Betrag des Wechselspannungssignals mit einer geringeren Abtastrate abgetastet wird als die Phase.

## Claims

1. Process for data reduction in radar systems, the magnitude and phase of the alternating voltage signal to be reduced being determined and then scanned, characterised in that
- the alternating voltage signal to be reduced is the output signal of the radar receiver; and
- the determined magnitude of the alternating voltage signal is scanned at a lower scanning rate than is the phase.

## Revendications

1. Procédé de réduction de données dans des systèmes radar dans lequel on détecte le module et la phase du signal de tension alternative à réduire puis on échantillonne celles-ci, caractérisé par le fait que
- le signal de tension alternative à réduire est le signal de sortie du récepteur radar et
- l'on échantillonne le module détecté du signal de tension alternative avec une vitesse d'échantillonnage plus faible que la phase.
